# EUROPÄISCHE PATENTSCHRIFT

(11) **EP 3 625 079 B1**
(45) Veröffentlichungstag und Bekanntmachung des Hinweises auf die Patenterteilung: **15.02.2023**
(21) Anmeldenummer: 18719535.9
(22) Anmeldetag: 20.04.2018
(51) Int. Cl.: B60L 13/00, B60L 13/03, B60L 13/08, B60L 13/10, E01B 25/34, E01B 25/00, B65G 47/64, B65G 54/02

(54) **MAGNETWEICHE FÜR EIN TRANSPORTSYSTEM**
MAGNET SWITCH FOR A TRANSPORT SYSTEM
AIGUILLAGE MAGNÉTIQUE POUR UN SYSTÈME DE TRANSPORT

(30) Priorität: 18.05.2017 DE 102017208454
(43) Veröffentlichungstag der Anmeldung: 25.03.2020
(73) Patentinhaber: Krones AG, 93073 Neutraubling (DE)
(72) Erfinder: DAVIDSON, Hartmut, 93073 Neutraubling (DE); KIENDL, Thomas, 93073 Neutraubling (DE); POESCHL, Stefan, 93073 Neutraubling (DE); NEUBAUER, Michael, 93073 Neutraubling (DE); KAMMERL, Martin, 93073 Neutraubling (DE)
(74) Vertreter: Grünecker Patent- und Rechtsanwälte PartG mbB
(86) Internationale Anmeldenummer: PCT/EP2018/060184
(87) Internationale Veröffentlichungsnummer: WO 2018/210529

(56) Entgegenhaltungen:
- EP-A1- 3 109 998
- WO-A1-2010/085670
- DE-A1-102013 218 389
- GB-A- 1 247 257

## Beschreibung

Die Erfindung betrifft eine Magnetweiche, im Folgenden nur Weiche genannt, für ein Transportsystem, in denen ein oder mehrere bewegliche/s Transportelement/e mit einem magnetischen Reaktionselement, auch Mover genannt, entlang einer Transportbahn mittels eines oder mehrerer Linearmotorstränge (auch Statoren) genannt, bewegbar sind. Die Erfindung betrifft des Weiteren ein Transportsystem umfassend eine solche Weiche. Das Transportsystem kann insbesondere für den Einsatz in der Getränkemittelindustrie, z. B. in einer Getränkeabfüllanlage, ausgebildet sein.

Entsprechende Transportsysteme mit Linearmotorantrieb sind aus dem Stand der Technik bekannt. Beispielsweise zeigt die DE 10 2013 218389 A1 eine Vorrichtung und ein Verfahren zum Schalten einer passiven Weiche für Transportsysteme mit Linearmotoren.

In den Transportsystemen kann durch Wechselwirkung von erzeugten Magnetfeldern an einem oder mehreren Linearmotorsträngen und einem magnetischen Reaktionselement, das auf dem beweglichen Transportelement angebracht ist, eine definierte Vortriebskraft auf jedes einzelne bewegliche Element entlang einer Transportbahn aufgebracht werden. Die magnetischen Reaktionselemente auf den beweglichen Transportelementen können aus Permanentmagneten und/oder nicht-schaltenden Elektromagneten bestehen, oder diese umfassen. Ein nicht-schaltender Elektromagnet ist typischerweise ein Elektromagnet, der so mit einer Stromversorgung und/oder einer Regeleinheit der Transporteinrichtung verbunden ist, dass er stets in derselben Richtung von einem, vorzugsweise regelbaren, elektrischen Strom durchflossen wird. Die Systeme können modular ausgebildet sein, d.h. aus vorgefertigten Modulen zusammenbaubar sein. Die Module können sowohl gerade, als auch gekrümmte Bahnen umfassen und insbesondere Weichen umfassen.

In solchen Systemen ist es auch bekannt, zur Führung der beweglichen Transportelemente auf der Transportbahn eine Normalkraft (Magnetnormalkraft) zu nutzen, die eine Haltekraft der beweglichen Transportelemente jeweils in Richtung des nebenliegenden Linearmotorstrangs (oder der nebenliegenden Linearmotorstränge) bewirkt. Über mechanische Bauteile (im Folgenden auch Führung oder Führungskurve genannt) kann der minimal erreichbare Abstand zwischen den beweglichen Transportelementen und dem oder den Linearmotorsträngen, sowie eine Verschiebung quer zur Bewegungsachse begrenzt werden und/oder eine Führung des beweglichen Transportelementes auf der Transportbahn vorgegeben werden.

Bei Verwendung zweier einander gegenüberliegender Statoren im Übergangsbereich, in dem die Nebenbahn von der Hauptbahn abzweigt, können magnetische Weichen erzeugt werden, in denen sich die magnetischen Normalkräfte auf beiden Seiten aufheben, so dass es keine Vorzugsrichtung gibt. Typischerweise greift dabei das magnetische Reaktionselement zwischen die beiden Linearmotorstränge ein.

Durch eine selektive Bestromung der Linearmotorstränge auf den beiden Seiten der beweglichen Transportelemente können nun die Kräfte im Übergangsbereich beeinflusst werden. Insbesondere kann dabei die resultierende Kraft auf der gewünschten Weichenseite erhöht werden und damit die Weiche so geschaltet werden, dass das bewegliche Transportelement in die gewünschte Richtung geleitet wird. Die Kraft zum selektiven Führen des beweglichen Transportelementes entlang der Hauptbahn oder in Richtung der Nebenbahn, hier beispielhaft durch selektive Bestromung der Linearmotorstränge im Übergangsbereich der Weiche, wird als Schaltkraft bezeichnet.

Solche Transportsysteme werden auch Langstator-Linearmotoren genannt und sind beispielsweise auch aus der WO 2015 013824 A1 oder der EP3109998A1 bekannt. Die Normalkraft (Magnetnormalkraft) bezeichnet in dieser Anmeldung eine Kraft, die sich aufgrund des magnetischen Reaktionselementes an dem beweglichen Transportelement zwischen diesem und dem oder den Linearmotorsträngen ausbildet, wobei die Normalkraft typischerweise auch ohne Beaufschlagung der Linearmotorstränge mit Strom aufgrund des magnetischen Reaktionselementes vorhanden ist. Sie kann z. B. auf der Reluktanzkraft zwischen dem magnetischen Reaktionselement an dem beweglichen Transportelement und dem Kern im Stator, typischerweise einem Eisenkern, beruhen. Sie kann insbesondere dazu dienen, die beweglichen Transportelemente während des Transports relativ zu den Statoren zu stabilisieren oder zu halten, insbesondere auf einer Führung zu halten. Im Weichenbereich kommen nun neben den Normalkräften auch noch Schaltkräfte zum Einsatz, die auf einer Wechselwirkung zwischen den Magnetfeldern des beweglichen Transportelements und den Stator(en) beruhen. Diese Schaltkräfte überlagern sich mit der Normalkraft.

Aufgrund von fertigungsbedingten oder im Betrieb auftretenden Toleranzen bezüglich der Abstände zwischen beweglichen Transportelementen und Statoren, sowie der Magnetstärke von gegebenenfalls verwendeten Elektromagneten in den beweglichen Transportelementen können jedoch zusätzliche Kräfte auftreten. Solche Toleranzen können dazu führen, dass die Normalkräfte in Richtung des einen Stators höher sind, als die Normalkräfte des auf der anderen Seite angeordneten Stators, so dass es dadurch zu Fehlfunktionen kommen kann.

DE 10 2013 218 389 A1 offenbart eine Transporteinrichtung mit einer Transportbahn mit mindestens einer passiven Weiche, die eine Hauptbahn und erste und zweite divergierende Nebenbahnen der Transportbahn umfasst. Weiter umfasst die Transporteinrichtung mindestens ein Transportelement mit einem Reaktionselement mit mindestens einem Permanentmagneten und/oder nicht schaltenden Elektromagneten. Die Transportbahn umfasst im Bereich der passiven Weiche feststehende erste und zweite Führungsschienen sowie parallel zu diesen Führungsschienen angeordnete Linearmotorstränge. Das Reaktionselement des Transportelements greift in eine Lücke zwischen dem ersten und zweiten Linearmotorstrang ein.

EP3109998A1 offenbart die Realisierung einer Übergabeposition in einem Langstatorlinearmotor, in der eine Transporteinheit magnetisch gelenkt wird, wobei vorgesehen ist, dass an der Übergabeposition eine seitenkraftbildende elektromagnetische Kraftkomponente zur Erzielung einer Lenkwirkung erzeugt wird.

Die Erfindung umfasst eine Weiche eines Transportsystems für mehrere bewegliche Transportelement nach Anspruch 1 und ein Transportsystem nach Anspruch 8, das eine solche Weiche umfasst. Vorteilhafte Ausführungsformen sind in den abhängigen Ansprüchen beschrieben. Das Transportsystem kann insbesondere für den Einsatz in der Getränkemittelindustrie, z. B. in einer Getränkeabfüllanlage, ausgebildet sein.

Gemäß der Erfindung soll im Weichenbereich das Verhältnis von Normalkraft zu Schaltkräften so gewählt werden, dass die Weiche zuverlässig funktioniert. Da die Störgrößen typischerweise umso größer sind, je größer die Normalkraft ist, ändert sich mit einer Optimierung von dem Verhältnis zwischen Normalkraft zur Schaltkraft typischerweise auch das Verhältnis von Störgrößen zur Schaltkraft.

In einer erfindungsgemäßen Weiche kann daher die Normalkraft und/oder die Schaltkraft im Übergangsbereich der Weiche so gewählt werden, dass die Weiche zuverlässig funktioniert.

Im Bereich der Weiche, insbesondere dem Übergangsbereich, in dem die Nebenbahn von der Hauptbahn abzweigt, ist das Transportsystem typischerweise so ausgebildet, dass die Führungswirkung der Normalkraft keine Rolle spielt, also insbesondere eine Schwächung der Normalkraft dem System nicht schadet. Dies kann beispielsweise durch eine Führung, z. B. auf den Statoren, erfolgen. Eine solche Führung kann z. B. nur im Bereich einer Weiche, nur im Übergangsbereich einer Weiche, oder optional auch in anderen oder allen Bereichen des Transportsystems vorhanden sein.

Erfindungsgemäß umfasst die Weiche eines Transportsystems für ein bewegliches Transportelement eine Hauptbahn, sowie eine abzweigende Nebenbahn, wobei das bewegliche Transportelement aus einem Übergangsbereich, in dem die Nebenbahn von der Hauptbahn abzweigt, wahlweise entlang der Hauptbahn geführt, oder in die Nebenbahn überführt werden kann. Hierbei ist die Bewegungsrichtung des Transportelements so, dass es sich entlang der Hauptbahn in Richtung des Übergangsbereichs so bewegt, dass es wahlweise entlang der Hauptbahn weitergeführt, oder in die Nebenbahn überführt werden kann und dann nach Durchlaufen der Weiche entweder entlang der Hauptbahn weiter, oder entlang der Nebenbahn weiterbewegt wird (im Folgenden auch genannt: Bewegungsrichtung auf die Weiche zu). Wenn im Folgenden "stromaufwärts" oder "stromabwärts" verwendet wird, wird diese Bewegungsrichtung vorausgesetzt. Selbstverständlich kann das bewegliche Transportelement auch von der Nebenbahn auf die Hauptbahn bzw. entlang der Hauptbahn befördert werden, wenn es in die entgegengesetzte Richtung bewegt wird. Da hier allerdings keine Auswahl der Bahn erfolgen muss, auf die das bewegliche Transportelement geführt wird, wird auf die Schaltung, gemäß der ein bewegliches Transportelement von einer der beiden Nebenbahnen auf die Hauptbahn der Weiche geführt wird, im Folgenden nicht weiter eingegangen. Mittels der Linearmotorstränge kann typischerweise eine Schaltkraft erzeugt werden, mit der das bewegliche Transportelement wahlweise auf der Hauptbahn geführt oder in die Nebenbahn überführt werden kann.

Erfindungsgemäß sind im Übergangsbereich Mittel zur Änderung der Normalkraft vorgesehen.

Der Übergangsbereich kann insbesondere den Bereich umfassen der zwischen dem Punkt der Transportbahn, an dem ein zweiter Linearmotorstrang neben dem Transportelement dazukommt, wenn das Transportelement in anderen Bereichen nur durch einen Linearmotorstrang angetrieben wird, und dem Punkt der Transportbahn, an dem das Transportelement nur vom Linearmotorstrang der Hauptbahn oder dem Linearmotorstrang der Nebenbahn angetrieben wird und/oder (im Wesentlichen) nur davon beeinflusst wird, liegt.

Alternativ, wenn das Transportelement im Transportsystem durch zwei Linearmotorstränge bewegt wird, kann der Übergangsbereich den Bereich umfassen in dem die beiden Linearmotorstränge neben der Hauptbahn nicht mehr parallel zueinander geführt werden (divergieren) und wo die neben den Nebenbahnen angeordneten Linearmotorstränge noch nicht parallel zueinander laufen. In der Weichenspitze setzen in einem solchen Fall nämlich typischerweise zwei Linearmotorstränge an, so dass auch in den Nebenbahnen das Transportelement wieder durch zwei Linearmotorstränge bewegt werden kann. Als Anfang des Übergangsbereichs kann der Teil des Übergangsbereichs bezeichnet werden, der von einem Transportelement als erstes durchlaufen wird, wenn es auf der Hauptbahn in Bewegungsrichtung auf die Weiche zu geführt wird, also z. B. der Bereich, an dem die beiden Linearmotorstränge neben der Hauptbahn beginnen, zu divergieren (oder beginnen würden, zu divergieren, wenn sie parallel zu dem Transportbahnrand geführt würden).

Der Übergangsbereich umfasst einen Bereich, in dem ein (jedes) Transportelement den gleichen Weg nimmt, unabhängig davon, ob es anschließend weiter entlang der Hauptbahn, oder in die Nebenbahn geführt wird. Optional können in diesem Bereich zwei Linearmotorstränge neben der Hauptbahn parallel zueinander geführt sein (oder so angeordnet sein, dass sie parallel geführt würden, wenn sie parallel zu dem Transportbahnrand geführt würden). Wenn dieser Bereich vom Übergangsbereich umfasst ist, sind in diesem Teil des Übergangsbereichs bereits Mittel zur Verringerung der Normalkraft vorgesehen. So kann bereits vor der Trennung der Wege entweder entlang der Hauptbahn oder in die Nebenbahn eine Krafteinwirkung auf das Transportelement sichergestellt werden, die eine sichere Leitung in die gewünschte Richtung bewirkt.

Insbesondere können in einem nicht zur Erfindung gehörenden Beispiel die Mittel zum Ändern der Normalkraft beispielsweise in diesen Übergangsbereich der Weiche vorgesehen sein. Dass "Mittel im Übergangsbereich der Weiche" vorgesehen sind, kann insbesondere umfassen, dass diese Mittel in (mindestens) einem Teil des Übergangsbereichs der Weiche oder im ganzen Übergangsbereich der Weiche vorgesehen sind.

Bei relativer Angabe in diesem Text, insbesondere dem Ändern, Verringern und Erhöhen der Normalkraft (oder Feldstärke, Windungszahl etc.), erfolgt diese Angabe im Vergleich zu einem anderen Bereich der Weiche, z. B. einem Bereich außerhalb des Übergangsbereichs der Weiche, und/oder einem anderen Bereich der Weiche oder des Transportsystems. Insbesondere können die relativen Angaben z. B. im Vergleich zu der entsprechenden Kraft oder Größe zwischen einem beweglichen Transportelement und dem Linearmotorstrang im Übergangsbereich der Weiche und dem Transportelement und dem entsprechenden Linearmotorstrang stromabwärts, z. B. stromabwärts am Ende der Weiche, und/oder stromaufwärts erfolgen.

Bei einem Übergangsbereich, insbesondere einem Übergangsbereich, der einen Bereich umfasst, in denen die Linearmotorstränge neben der Hauptbahn parallel zueinander geführt sind, sind die Mittel zur Erhöhung der Schaltkraft und/oder zur Änderung oder Verringerung der Normalkraft im Übergangsbereich typischerweise so ausgebildet, dass sie die jeweilige Kraft, z.B. die Normal- oder Schaltkraft, im Vergleich zu den Kräften zwischen dem jeweiligen Transportelement und dem Linearmotorstrang stromabwärts des Übergangsbereichs ändern können und/oder im Vergleich zu der Normal- oder Schaltkraft ändern können, die erzeugbar wären (oder erzeugt würden), wenn mittels des oder der Linearmotorstränge in anderen Bereichen des Transportsystems die Normalkraft oder eine Schaltkraft erzeugt würde. Beispielsweise kann, wenn das bewegliche Transportelement stromabwärts des Übergangsbereichs durch einen Linearmotorstrang angetrieben wird, die Normalkraft zwischen diesem Linearmotorstrang und dem Transportelement im Übergansbereich geändert (verringert, erhöht) sein. Zusätzlich kann im Übergangsbereich ein weiterer Normalkraftanteil, z. B. durch einen dazukommenden Linearmotorstrang, vorhanden sein, der ebenfalls geändert (verringert, erhöht) ist gegenüber der Normalkraft zwischen dem dazukommenden Linearmotorstrang und dem beweglichen Transportelement.

Die Mittel zur Änderung der Normalkraft sind dazu vorgesehen, um die Normalkraft zu verringern. Beispielsweise können diese Mittel dazu geeignet sein, die Normalkraft so zu beeinflussen, dass diese im Übergangsbereich geringer ist, insbesondere beispielsweise stromabwärts des Übergangsbereichs.

Beispielsweise kann im Übergangsbereich der Weiche der Luftspalt zwischen den beiden Linearmotorsträngen und einem bewegten Transportelement vergrößert sein, z. B. größer als stromabwärts des Übergangsbereichs.

Durch die Vergrößerung des Luftspalts im Weichenbereich nimmt die (Magnet-)Normalkraft, die mit der Breite des Luftspalts typischerweise quadratisch abnimmt, schneller ab als die Schaltkräfte, die typischerweise damit linear abnehmen, so dass sich dadurch typischerweise das Verhältnis zwischen Schaltkraft und Normalkraft mit zunehmenden Luftspalt verbessert.

Eine solche Vergrößerung des Luftspalts zwischen den beiden Linearmotorsträngen und einem bewegten Transportelement kann insbesondere dadurch erfolgen, dass im Übergangsbereich der Weiche die beiden Linearmotorstränge versetzt sind im Bezug auf die Begrenzung der Transportbahn, also nicht im gleichen Abstand zum Rand der Transportbahn laufen wie in anderen Bereichen der Weiche (z. B. stromabwärts am Ende der Weiche), sondern im Übergangsbereich mit einem größeren Abstand zum jeweiligen Rand der Transportbahn gesetzt sind.

Alternativ oder zusätzlich kann der Luftspalt zwischen den beiden Linearmotorsträngen und einem bewegten Transportelement auch vergrößert werden, indem die Linearmotorstränge verdreht eingebaut sind in Bezug zur normalen Einbaurichtung im Bezug aufeinander und auf die Transportbahn (bzw. den Transportbahnrand).

Alternativ oder zusätzlich kann der Luftspalt zwischen den beiden Linearmotorsträngen und einem beweglichen Transportelement auch dadurch vergrößert werden, dass der Abstand zwischen dem Transportelement und den Linearmotorsträngen durch eine spezielle Führungskurve für das Transportelement vergrößert wird, also die Führungskurve im Übergangsbereich der Weiche so geführt wird, dass ein größerer Abstand zwischen den Linearmotorsträngen und dem Transportelement entsteht als in anderen Bereichen der Weiche, z. B. stromabwärts am Ende der Weiche. Dies kann beispielsweise dadurch erfolgen, dass die Führungskurve das Transportelement vom Transportbahnrand wegführt.

Zusätzlich oder alternativ kann in einem nicht zur Erfindung gehörenden Beispiel der Übergangsbereich durch eine breitere Ausbildung des Übergangsbereichs vergrößert werden, also die beiden Linearmotorstränge im Übergangsbereich mit einem größeren Abstand zur Führungskurve geführt werden als in anderen Bereichen der Weiche (z. B. stromabwärts am Ende der Weiche).

Alternativ oder zusätzlich kann die Normalkraft dadurch verringert werden, dass im Übergangsbereich die magnetische Leitfähigkeit der Linearmotorstränge verringert ist, also z. B. kleiner ist als in einem anderen Bereich der Weiche, z.B. stromabwärts des Übergangsbereichs.

Die magnetische Leitfähigkeit der Linearmotorstränge im Übergangsbereich kann beispielsweise dadurch verringert werden, dass (mindestens) der ferromagnetische Teil der Linearmotorstränge im Übergangsbereich sich verjüngend ausgebildet sind, also schmaler wird. Dadurch kann beispielsweise ihr Kern, beispielsweise ein Eisenkern, in dem Bereich dünner ausgebildet sein. Dadurch kann die magnetische Leitfähigkeit der Linearmotorstränge gegenüber Bereichen, in denen der ferromagnetische Teil der Linearmotorstränge nicht verjüngt ist, verringert sein. Somit kann die Normalkraft in den Bereichen der Verjüngung verringert sein. Hierbei kann nur der Kern der Linearmotorstränge im Übergangsbereich sich verjüngend ausgebildet sein und optional die Außenbegrenzung der Linearmotorstränge in ihrem Durchmesser unverändert sein, oder alternativ können die Linearmotorstränge selber ebenfalls sich verjüngend ausgebildet sein.

Alternativ oder zusätzlich kann im Übergangsbereich ein Teil des Linearmotorgrundkörpers aus einem anderen Material bestehen, insbesondere z. B. als der Linearmotorgrundkörper in mindestens einem anderen Bereich, z. B. stromabwärts am Ende der Weiche. Typischerweise ist der Linearmotorgrundkörper aus Eisen. Das andere Material hat typischerweise eine geringere magnetische Leitfähigkeit (magnetische Permeabilität), so dass dadurch die magnetische Leitfähigkeit verringert werden kann. Hierbei kann der Linearmotorgrundkörper im Übergangsbereich teilweise oder vollständig aus dem anderen Material bestehen.

In einigen nicht zur Erfindung gehörenden Beispielen kann im Übergangsbereich eine Stromzuführung vorgesehen sein, die es erlaubt, zwei voneinander unabhängig ansteuerbare Elektromagnete auf einem Transportelement anzusteuern, die jeweils einem Linearmotorstrang zugewandt sind. Die Ansteuerung kann für die beiden Elektromagneten voneinander unabhängig möglich sein oder gekoppelt sein. Typischerweise ist die Stromzuführung so ausgebildet, dass der erste Elektromagnet des Transportelements so geschaltet werden kann, dass die Normalkraft auf der einem ersten Linearmotorstrang zugewandten Seite verstärkt wird, und der zweite Elektromagnet so geschaltet werden kann, dass die Normalkraft auf der dem zweiten Linearmotorstrang zugewandten Seite verringert wird. Typischerweise ist eine umgekehrte Schaltung ebenfalls möglich, so dass das Transportelement wahlweise entlang der Hauptbahn geführt oder in die Nebenbahn überführt werden kann. Dadurch kann die Änderung der Normalkraft einen Beitrag zur Überführung des beweglichen Transportelements in die gewählte Bahn leisten (die Schaltkraft erhöhen).

Ein nicht zur Erfindung gehörendes Beispiel umfasst des Weiteren ein bewegliches Transportelement für ein Transportsystem. Das bewegliche Transportelement ist typischerweise dafür ausgebildet, auf einem Transportsystem bewegt zu werden und umfasst insbesondere typischerweise ein magnetisches Reaktionselement, mit dem durch Steuerung durch die Linearmotorstränge das Transportelement auf der Transportbahn bewegbar ist, typischerweise entlang einer Führung.

In einem nicht zur Erfindung gehörenden Beispiel kann neben dem magnetischen Reaktionselement das bewegliche Transportelement auch zwei voneinander unabhängig schaltbare Elektromagnete umfassen und/oder das magnetische Reaktionselement kann durch zwei unabhängig voneinander schaltbare Elektromagnete gebildet sein. Diese Elektromagnete sind typischerweise so ausgebildet, dass sie im Übergangsbereich der Weiche getrennt ansteuerbar sind, z. B. mit einer oben beschriebenen Stromzuführung, so dass die Normalkraft auf der einem Linearmotorstrang zugewandten Seite gesenkt und auf der anderen gesteigert werden kann, so dass das Transportelement zuverlässiger wahlweise entlang der Hauptbahn oder in die Nebenbahn der Weiche geführt werden kann.

In einem nicht erfindungsgemäßen Beispiel können bei einer Weiche im Übergangsbereich Mittel zur Erhöhung der Schaltkraft vorgesehen sein.

Insbesondere können beispielsweise und nicht zur Erfindung gehörend im Übergangsbereich die Linearmotorstränge so ausgebildet sein, dass die magnetische Feldstärke der Linearmotorstränge höher geschaltet werden kann, insbesondere z. B. als stromabwärts des Übergangsbereichs in der Hauptbahn und/oder der Nebenbahn und/oder stromaufwärts. Dies kann insbesondere bedeuten, dass die beim sicheren Betrieb möglichen magnetischen Feldstärken der Linearmotorstränge für diesen Bereich höher sind.

Eine Erhöhung der Feldstärke in den Linearmotorsträngen verstärkt die Wechselwirkung zwischen den Linearmotorsträngen (Statoren) und dem beweglichen Transportelement (genauer: dem magnetisch magnetischen Reaktionselement oder -elementen oder anderen (passiven) magnetischen Elementen des beweglichen Transportelementes). Durch eine höhere magnetische Feldstärke kann insbesondere die dadurch erzeugbare Schaltkraft erhöht werden.

Hierbei kann die Schaltkraft dadurch erfolgen, dass nur ein Linearmotorstrang bestromt wird und damit eine Anziehungskraft in Richtung der gewählten Bahn (Haupt- oder Nebenbahn) ausübt, während der andere nicht bestromt wird, so dass das bewegliche Transportelement in eine Richtung und die gewünschte Bahn geführt wird. Alternativ kann, statt einen Linearmotor nicht zu bestromen, dieser so bestromt werden, so dass er eine abstoßende Kraft auf das bewegliche Transportelement ausübt, so dass die abstoßende Wirkung das bewegliche Transportelement zusätzlich in Richtung der gewünschten Bahn "schiebt".

Eine solche beispielhafte, nicht zur Erfindung gehörende Ausbildung der Linearmotorsträngen, die eine höhere Schaltung der magnetischen Feldstärke erlaubt, kann beispielsweise umfassen, dass die Windungszahl der Linearmotorstränge im Übergangsbereich höher ist als an mindestens einem anderen Punkt der Weiche oder des Transportsystems, insbesondere z. B. stromabwärts am Ende der Weiche und/oder stromaufwärts des Übergangsbereichs. Mit höherer Windungszahl sinkt die maximal mögliche Vorschubgeschwindigkeit, so dass typischerweise Weiche mit erhöhte Windungszahlen in Transportsystemen eingesetzt werden können, in denen auf der Weiche nicht die gleiche Vorschubgeschwindigkeit wie stromaufwärts erreicht werden muss.

Alternativ oder zusätzlich kann in einem nicht zur Erfindung gehörenden Beispiel die zulässige Stromstärke der Linearmotorsträngen im Übergangsbereich erhöht sein, z. B. höher als stromabwärts und/oder stromaufwärts des Übergangsbereichs . Dies kann, beispielsweise, durch die Verwendung von Spulen mit höheren Spulenquerschnitten ermöglicht werden. Bei solchen größeren Spulenquerschnitten kann bei einer höheren Stromstärke die gleiche thermische Belastung erreicht werden, also die thermischen Grenzwerte noch eingehalten werden.

Alternativ oder zusätzlich können in einem nicht zur Erfindung gehörenden Beispiel Bauteile mit höheren thermischen Grenzwerten zum Einsatz kommen, die eine Erhöhung der Stromstärke erlauben.

Alternativ oder zusätzlich kann in einem nicht zur Erfindung gehörenden Beispiel im Übergangsbereich die Wärmeabfuhr verbessert sein, z. B. besser als in einem Bereich stromabwärts und/oder stromaufwärts. Eine bessere Wärmeabfuhr kann durch eine bessere Kühlung, beispielsweise durch zusätzliche Kühlrippen, eine Wasserkühlung, eine verbesserte Wasserkühlung oder Anbau eines Lüfters und/oder eine Verbesserung der Konvektion erreicht werden. Durch zusätzliche Kühlung kann die zulässige Stromstärke erhöht werden, da dann die thermischen Grenzwerte weniger schnell erreicht werden als ohne Kühlung.

Alternativ oder zusätzlich kann in einem nicht zur Erfindung gehörenden Beispiel die Weiche im Übergangsbereich ansteuerbare Spulen umfassen, die zusätzlich zu den Spulen der Linearmotorstränge vorhanden sind und dazu geeignet sind, die Schaltkraft im Zusammenspiel mit einem oder mehreren magnetisch leitfähigen passiven Bauteilen auf einem beweglichen Transportelement zu erhöhen.

Beispielsweise und nicht zur Erfindung gehörend können im Übergangsbereich der Weiche zusätzliche Spulen umfasst sein. Beispielsweise können diese bei gedanklicher Betrachtung einer Ebene die durch die beiden Linearmotorsträngen geht, senkrecht zur Ebene oberhalb und unterhalb (bzw. rechts und links) dieser Ebene angeordnet sein. Die Spulen können mit den Linearmotorsträngen zusammen in einer Ebene senkrecht zu der betrachteten Ebene durch die Linearmotorstränge angeordnet sein. Wenn die Spulen eine andere Breite als die Spulen der Linearmotorstränge haben, bezieht sich die betrachtete Ebene typischerweise auf die Ebene der Spulenseite, die dem beweglichen Transportelement zugewandt ist. Alternativ können sie in Richtung parallel zu der betrachteten Ebene durch die Linearmotorstränge in Richtung der Transportbahn nach hinten versetzt sein.

Ein beispielhaftes, nicht erfindungsgemäßes Transportelement kann ein oder mehrere magnetisch leitfähige passive Bauteile umfassen, die so angeordnet sind, dass sie zusammen mit den zuvor beschriebenen Spulen, die im Übergangsbereich zusätzlich zu den Spulen der Linearmotorsträngen vorhanden sein können, zusammenwirken können, um die Schaltkraft zu erhöhen. Insbesondere kann durch die Wechselwirkung zwischen diesen Spulen und den magnetisch leitfähigen passiven Bauteilen die Schaltkraft in die gewählte Richtung entlang der Hauptbahn oder in die Nebenbahn erhöht werden.

Passive Bauteile können beispielsweise als Teil des Transportelements ausgeführt werden und aus ferromagnetischem Material wie beispielsweise Eisen bestehen, oder ein solches umfassen. Sie entsprechen typischerweise in den Abmaßen, zumindest in der Höhe, (etwa) den Abmaßen der zusätzlich angebrachten Spulen und befinden sich typischerweise auch räumlich in dieser Ebene. Typischerweise ist ein solches passives Bauteil maximal so breit wie das magnetische Reaktionselement auf dem Transportelement. Die Höhe richtet sich typischerweise nach der zu erzielenden Kraft und bewegt sich typischerweise im Bereich von ca. 5 bis 10 mm.

Die Erfindung umfasst des Weiteren ein Transportsystem für ein bewegliches Transportelement, das mindestens eine Transportbahn mit mindestens einer Weiche wie zuvor beschrieben umfasst. Das Transportsystem kann insbesondere für den Einsatz in der Getränkemittelindustrie, z. B. in einer Getränkeabfüllanlage, ausgebildet sein. Ein Transportsystem kann optional eine oder mehrere zusätzliche Weichen und/oder modulare Fortsetzungen der Haupt- und/oder Nebenbahn umfassen. Typischerweise umfasst ein solches Transportsystem eine Führungskurve oder andere mechanische Bauteile, entlang derer das bewegliche Transportelement auf der Transportbahn geführt wird. Ein solches Transportsystem kann ein oben beschriebenes Transportelement oder mehrere der oben beschriebenen Transportelemente umfassen.

Die Mittel zum Erhöhen der Schaltkraft und Verändern der Normalkraft können in jeglicher Kombination angewandt werden. Beispielsweise kann eine gleichzeitige Änderung (Verringerung) der Normalkraft zusammen mit einer Erhöhung der Schaltkraft, z. B. durch zusätzliche Spulen und/oder Elektromagneten eine noch zuverlässigere Zuführung des Transportelementes auf die gewünschte Bahn der Weiche erreichen.

Ein nicht zur Erfindung gehörendes Beispiel umfasst auch ein Verfahren zum Schalten von einer oder mehreren der oben beschriebenen Komponenten in einem Transportsystem, um ein bewegliches Transportelement auf die gewählte Bahn (entlang der Hauptbahn oder in die Nebenbahn) zu überführen.

Weitere Ausführungsbeispiele werden im Folgenden mit Blick auf die Figuren beschrieben. Hierbei zeigt:
**Figur 1a und Figur 1b** eine Weiche aus dem Stand der Technik;
**Figur 2a und Figur 2b** eine Weiche mit einem im Übergangsbereich größeren Luftspalt zwischen Transportbahn und Linearmotorsträngen;
**Figur 3a und Figur 3b** eine andere Weiche mit im Übergangsbereich größeren Luftspalt zwischen Transportbahn und Linearmotorsträngen;
**Figur 4a und Figur 4b** eine weitere Weiche mit im Übergangsbereich größeren Luftspalt zwischen Transportbahn und Linearmotorsträngen;
**Figur 5a und Figur 5b** eine Weiche, bei der der Linearmotorgrundkörper im Übergangsbereich teilweise aus einem anderen Material besteht;
**Figur 6a und Figur 6b** eine Weiche, in der der Linearmotorgrundkörper im Übergangsbereich vollständig auf einem anderen Material ausgebildet ist;
**Figur 7** einen Querschnitt durch ein Transportelement im Übergangsbereich einer Weiche;
**Figur 8** einen Querschnitt durch ein Transportelement im Übergangsbereich einer Weiche; und
**Figur 9** einen Querschnitt durch ein Transportelement im Übergangsbereich einer Weiche.

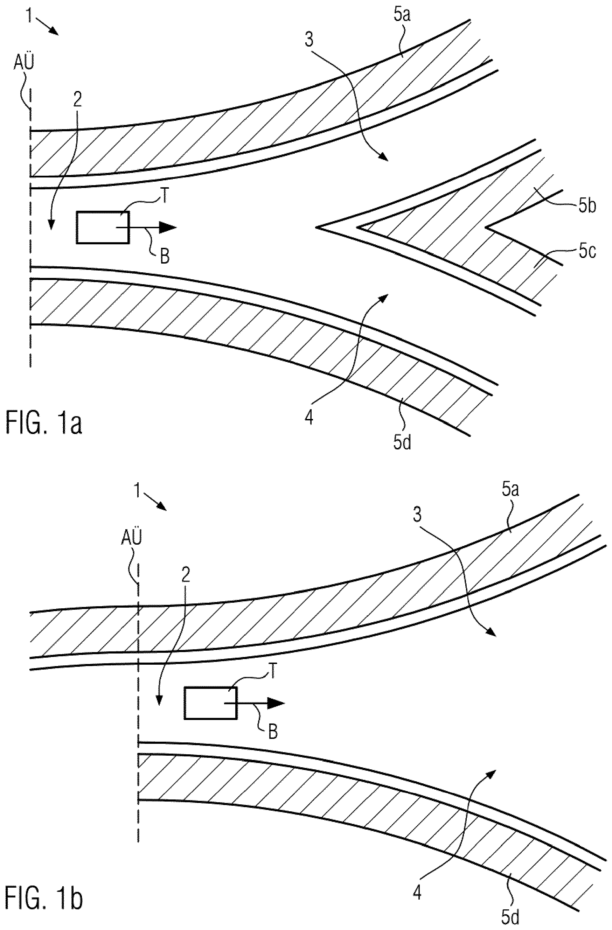

In Figur 1a ist eine aus dem Stand der Technik bekannte Weiche 1 gezeigt. Sie umfasst einen Übergangsbereich 2, eine Hauptbahn 3 und eine Nebenbahn 4, in die das bewegliche Transportelement T bei Bewegungsrichtung B (auf die Weiche zu) wahlweise überführt werden kann. Eine solche Überführung funktioniert natürlich nur, wenn sich das bewegliche Transportelement in Bewegungsrichtung B auf der Transportbahn bewegt. Eine entsprechend umgekehrte Bewegungsrichtung ist typischerweise auch möglich. Da in diesem Fall aber die Auswahl der Richtung nicht erfolgen muss, wird dieser Fall im Folgenden nicht weiter diskutiert.

Entlang der Hauptbahn laufen im Übergangsbereich Linearmotorstränge 5a und 5d erst parallel. Im Übergangsbereich der Weiche entfernen sich Linearmotorstränge 5a und 5d voneinander (divergieren, so dass sie nicht mehr parallel laufen). Linearmotorstrang 5a wird nach dem Übergangsbereich entlang der Hauptbahn 3, und Linearmotorstrang 5d entlang der Nebenbahn 4 geführt. Damit auch für die Nebenbahnen nach der Verzweigung die Führung der beweglichen Transportelemente T durch zwei Linearmotorstränge erfolgt, die parallel zueinander laufen, setzen an der Weichenspitze Linearmotorstränge 5b und 5c an. Linearmotorstrang 5b läuft dann parallel zu dem Linearmotorstrang 5a, wohingegen Linearmotorstrang 5c parallel zu Linearmotorstrang 5d läuft, so dass jeweils die Linearmotorstränge 5a und 5b zusammen ein Transportelement auf der Nebenbahn 3 und die Linearmotorstränge 5c und 5d zusammen ein Transportelement T auf der Nebenbahn 4 beschleunigen können.

Ein beispielhafter Anfang des Übergangsbereichs AÜ ist in Figur 1a eingezeichnet, wo die Linearmotorstränge 5a und 5d anfangen, zu divergieren. Alternativ kann dieser Anfang der Übergangsbereichs sich auch an einer anderen Stelle befinden, z. B. in der Figur weiter nach links verschoben sein und der Übergangsbereich einen Bereich der Hauptbahn umfassen, in dem die Linearmotorstränge 5a und 5d parallel verlaufen (nicht gezeigt).

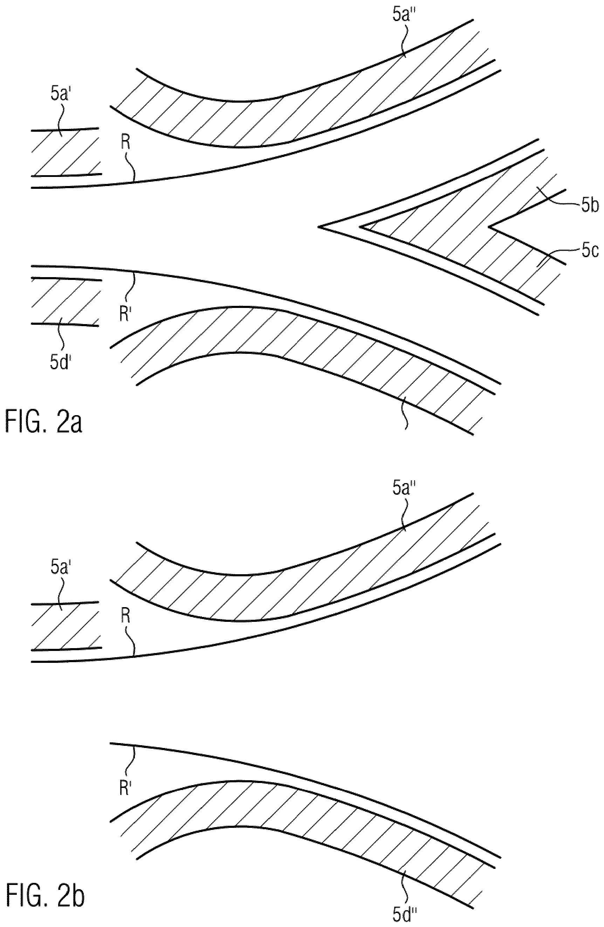

In anderen Ausführungsformen des Standes der Technik, wie z. B. in Figur 1b gezeigt, werden die Transportelemente entlang der Hauptbahn 3 nur durch einen Linearmotorstrang 5a bewegt und erst im Übergangsbereich 2 kommt ein weiterer Linearmotorstrang 5d hinzu, durch den das bewegliche Transportelement optional in die Nebenbahn 4 überführt werden kann. Eingezeichnet ist ebenfalls ein beispielhafter Anfang des Übergangsbereichs AÜ. Im Übergangsbereich einer Weiche (sowohl im Stand der Technik, als auch den im Folgenden beschriebenen erfindungsgemäßen Weichen, z. B. den Weichen der Figuren 2b, 3b, 4b, 5b) können optional im Übergangsbereich die Linearmotorstränge 5a und 5d in einem Bereich parallel verlaufen, bevor sie auseinander laufen, um entlang der Hauptbahn bzw. der Nebenbahn zu führen (nicht gezeigt). In einem solchen Fall kann der Übergangsbereich, wie beispielhaft für Figur 1a erläutert, auch an einer anderen Stelle, z. B. in der Figur weiter nach links verschoben sein, insbesondere z. B. zu Beginn des Bereichs anfangen, in dem der zweite Linearmotorstrang hinzukommt.

Figur 2a zeigt ein Beispiel einer erfindungsgemäßen Weiche, bei der im Übergangsbereich der Luftspalt zwischen den beiden Linearmotorsträngen und einem bewegten Transportelement größer ist als an mindestens einem anderen Punkt der Transportbahn, z. B. stromabwärts. Insbesondere sind in Figur 2a die Linearmotorstränge 5a" und 5d" im Übergangsbereich versetzt zu der normalen Anordnung von Linearmotorsträngen 5a', 5d' und 5a" und 5d" stromabwärts des Übergangsbereichs zu den Transportbahnrändern R, R` angeordnet, so dass sich im Übergangsbereich ein größerer Luftspalt zwischen den Linearmotorsträngen 5a" und 5d" und den Transportbandrändern R, R` und damit typischerweise auch zwischen einem (typischerweise entlang einer Führung) auf der Transportbahn bewegten Transportelement im Übergangsbereich ergibt.

Der Luftspalt kann, wie hier beispielhaft eingezeichnet, seinen größten Wert am Anfang des Übergangsbereichs haben. An dieser Stelle erfolgt typischerweise die erste Steuerung des beweglichen Transportelementes, so dass in diesem Bereich Störungen besonders störend wirken, da sie sehr leicht zur Überführung des transbeweglichen Transportelementes in die falsche Bahn führen können. Daher ist insbesondere in diesem Bereich eine Verringerung der Normalkraft vorteilhaft.

Figur 2b zeigt eine Weiche für ein System, in dem das bewegliche Transportelement im Transportsystem außerhalb der Weiche nur durch einen Linearmotorstrang angetrieben wird, z. B. auf der Hauptbahn (in den Bereichen außerhalb des Übergangsbereichs) durch Linearmotorstränge 5a' und 5a" und auf der Nebenbahn durch Linearmotorstrang 5d". Allerdings gibt es entsprechend keinen Linearmotorstrang 5d' in Figur 2b. Auch in einem solchen System kann entsprechend Figur 2a im Übergangsbereich der Luftspalt zwischen den beiden Linearmotorsträngen und einem bewegten Transportelement vergrößert sein, d. h. der Abstand zwischen jeweils einem Transportelement und dem Linearmotorstrang im Übergangsbereich größer als z. B. stromabwärts am Ende der Weiche oder stromabwärts der Weiche, wenn das bewegliche Transportelement entlang diesem Linearmotorstrang weitergeführt wird. Die für Figur 2a beschriebenen weiteren Merkmale können in einer Weiche, wie in Figur 2b gezeigt, optional ebenso umfasst sein.

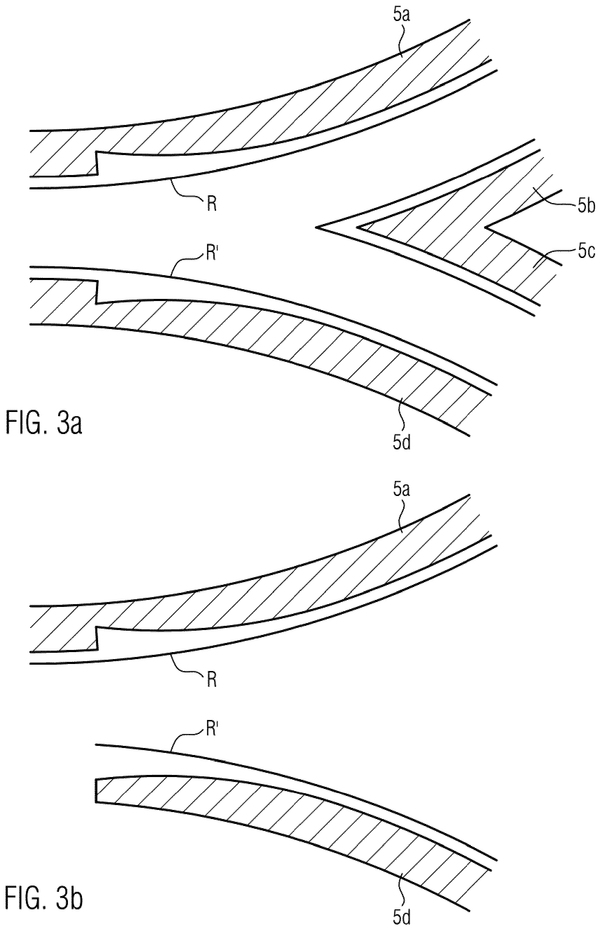

Figur 3a zeigt eine alternative Ausführungsform, in der ebenfalls der Luftspalt zwischen dem beweglichen Transportelement und den Linearmotorsträngen im Übergangsbereich vergrö-βert ist. Auch hier kann der größte Wert des Luftspaltes insbesondere am Anfang des Übergangsbereichs vorliegen. In dem gezeigten Beispiel sind allerdings die Linearmotorstränge nicht versetzt angeordnet, sondern sich verjüngend ausgebildet, so dass sich dadurch ein vergrößerter Luftspalt zu den Transportbahnrändern R, R` und damit auch zu einem beweglichen Transportelement auf der Transportbahn ergibt. Alternativ kann der Durchmesser der Linearmotorstränge gleich bleiben und nur der Kern, z. B. der Eisenkern, der Linearmotorstränge sich verjüngend ausgebildet sein (nicht gezeigt).

Figur 3b zeigt eine entsprechende Weiche für ein System, in dem das bewegliche Transportelement im Transportsystem außerhalb der Weiche nur durch einen Linearmotorstrang angetrieben wird. Die anderen für Figur 3a beschriebenen Merkmale und Alternativen können bei einer in Figur 3b gezeigten Weiche optional ebenso umfasst sein.

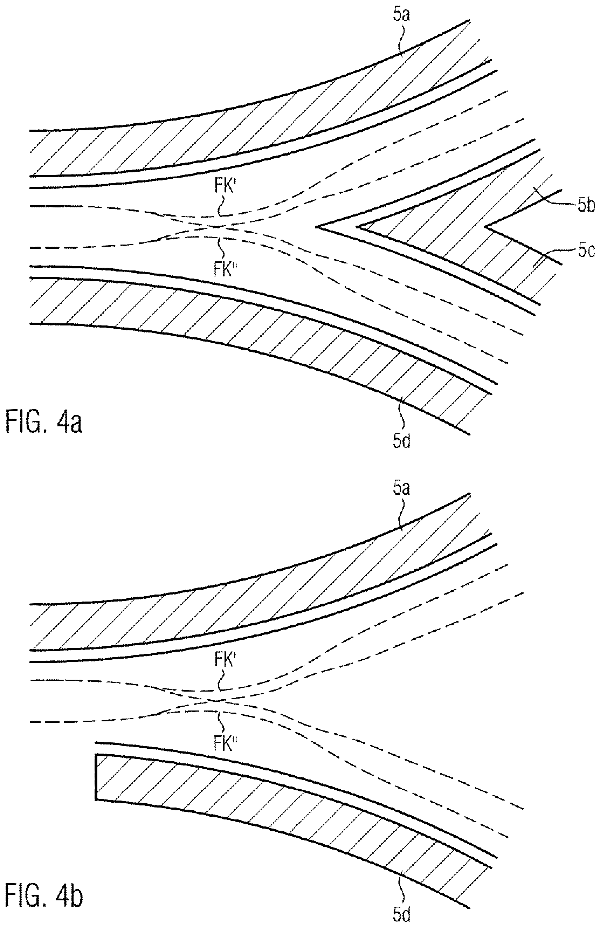

Figur 4a zeigt ein anderes Beispiel einer Weiche, in der der Luftspalt vergrößert ist. Im gezeigten Beispiel wird der Luftspalt zwischen Linearmotorsträngen 5a und 5d dadurch vergrö-βert, dass die Führung (hier beispielhaft in Form von Führungskurven FK', FK") entsprechend ausgebildet ist, also von den Linearmotorsträngen weg führt. Alternativ kann der Luftspalt auch durch Vergrößerung des Weichenbereichs oder als Anordnung der Linearmotorstränge 5a und 5d weiter außen erfolgen (nicht gezeigt).

Die Vergrößerung des Luftspalts kann beispielsweise dadurch erfolgen, dass eine Einheit aus Führung und Motorstrang, in Figur 4a beispielsweise 5d und FK", um den gewünschten zusätzlichen Abstand von der Einheit 5a und FK` verschoben wird. Der Abstand zwischen FK` und FK" kann beispielsweise dem bisherigen, nicht veränderten Führungsabstand in der Weiche (z. B. stromaufwärts oder stromabwärts) entsprechen. Durch die angepasste Kontur der Führungskanten, analog zu Figur 4a, kann sich somit ein größerer Luftspalt zwischen den Linearmotorsträngen und Reaktionselement ergeben.

Figur 4b zeigt eine entsprechende Weiche wie in Figur 4a für ein System, in dem das bewegliche Transportelement im Transportsystem außerhalb der Weiche nur durch einen Linearmotorstrang angetrieben wird. Die anderen für Figur 4a beschriebenen Merkmale und Alternativen können bei einer in Figur 4b gezeigten Weiche optional ebenso umfasst sein.

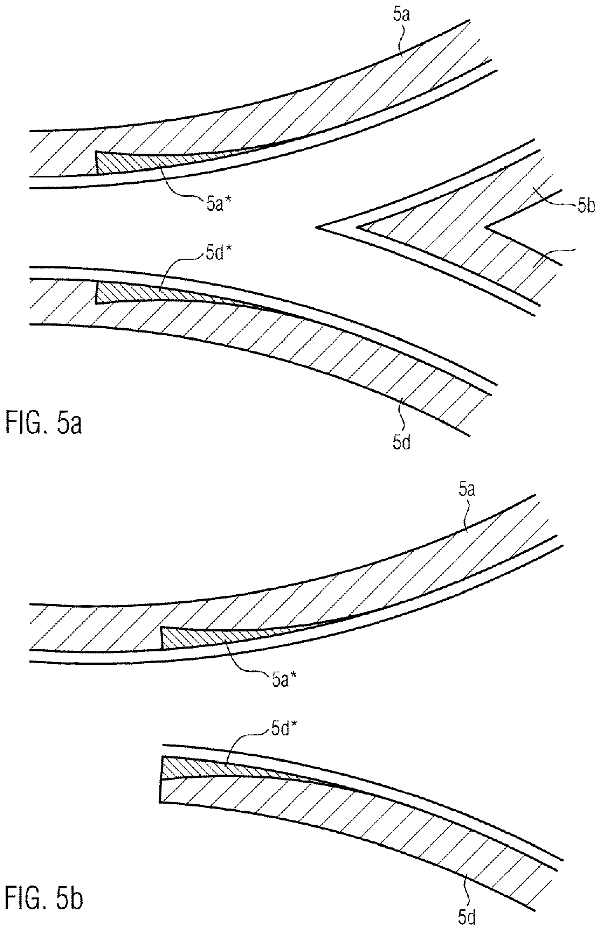

Figur 5a zeigt ein Ausführungsbeispiel für eine Weiche, in dem ein Teil der Linearmotorgrundkörper aus einem anderen Material besteht als der Rest des Linearmotorgrundkörpers, insbesondere in dem gezeigten Beispiel der Linearmotorgrundkörper, z. B. stromabwärts des Übergangsbereichs. Hierbei kommt typischerweise der in den Bereichen 5a* und 5d* ein Material mit einer geringeren magnetischen Leitfähigkeit zum Einsatz als in anderen Teilen der Linearmotorgrundkörper 5a, 5d und der Linearmotorgrundkörper 5b und 5c. Dies ermöglicht eine Reduzierung der Normalkraft in dem Übergangsbereich. Wenn das ersetzte Volumen des Grundkörpers entlang dem Verlauf des Grundkörpers variiert, ist typischerweise am Anfang des Übergangsbereichs der größte Anteil des Linearmotorgrundkörpers mit einem anderen Material ersetzt, so dass in dem Bereich, in Störungen typischerweise den meisten Einfluss haben, die Normalkraft am meisten verringert ist.

Figur 5b zeigt eine entsprechende Weiche für ein System, in dem das bewegliche Transportelement im Transportsystem außerhalb der Weiche nur durch einen Linearmotorstrang angetrieben wird. Die anderen für Figur 5a beschriebenen Merkmale können bei einer in Figur 5b gezeigten Weiche optional ebenso umfasst sein.

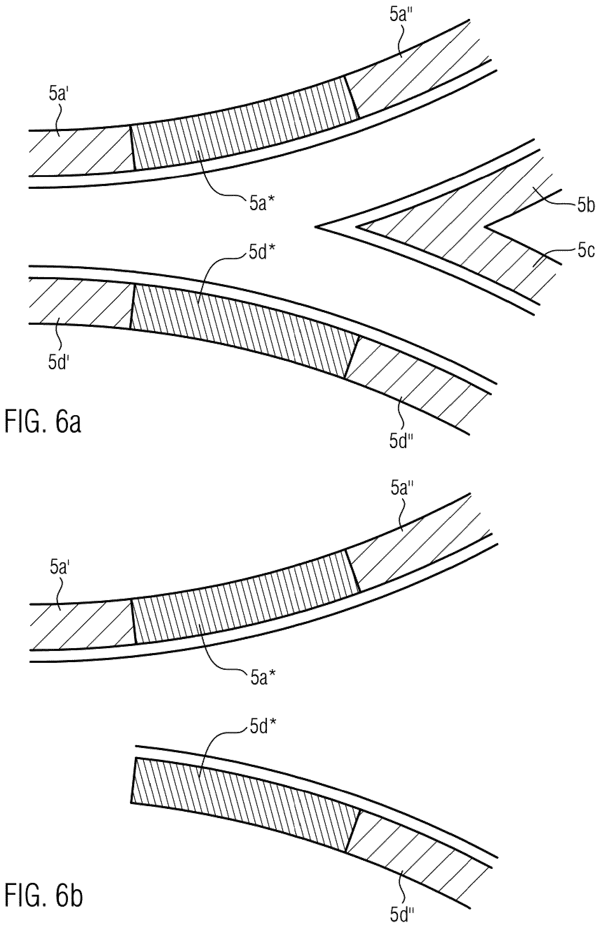

Figur 6a zeigt ein Ausführungsbeispiel für eine Weiche, in dem in den Bereichen 5a* und 5d* der Linearmotorgrundkörper vollständig aus einem anderen Material, typischerweise mit geringerer magnetischer Leitfähigkeit, ausgebildet ist, z. B. als die Linearmotorgrundkörper in den Bereichen 5a', 5a", 5d', 5d" ausgebildet ist. Typischerweise ist das andere Material im Übergangsbereich angeordnet.

Figur 6b zeigt eine entsprechende Weiche für ein System, in dem das bewegliche Transportelement im Transportsystem außerhalb der Weiche nur durch einen Linearmotorstrang angetrieben wird. Dementsprechend gibt es den Linearmotorstrangbereich 5d' in der gezeigten Weiche nicht. Die anderen für Figur 6a beschriebenen Merkmale können bei einer in Figur 6b gezeigten Weiche optional ebenso umfasst sein.

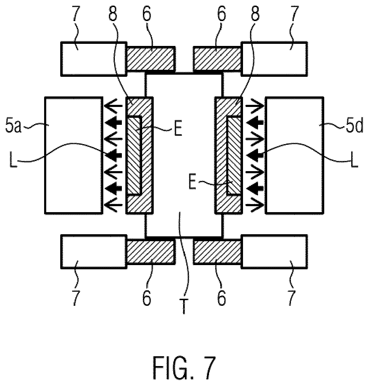

Figur 7 zeigt einen Querschnitt durch ein erfindungsgemäßes bewegliches Transportelement T. In der gezeigten Ausführungsform umfasst das bewegliche Transportelement beidseitig voneinander unabhängig schaltbare Elektromagnete E. In dem gezeigten Beispiel ist ein Querschnitt durch das Transportelement und die Linearmotorstränge 5a und 5d gezeigt und zwar im Übergangsbereich auf der Hauptbahn bevor das Transportelement in die Nebenbahn überführt oder entlang der Hauptbahn weiterbewegt ist, aber während schon Kräfte zum Führen des Transportelementes auf die gewählte Bahn wirken.

Eingezeichnet ist hier die Situation, in der die beiden voneinander unabhängig schaltbaren Elektromagnete E in die gleiche Richtung geschaltet sind, so dass sie beide in der Wechselwirkung mit den Linearmotoren eine Kraft nach links ausüben. Auf der in der Figur links gezeichneten Seite des Transportelementes T verstärkt der Elektromagnet E die Normalkraft, während der Elektromagnet auf der in der Figur rechts gezeigten Seite die Normalkraft schwächt. Insgesamt wird dadurch eine zusätzliche Kraft nach links erzeugt, so dass das Transportelement T in diese Richtung geführt würde, und entsprechend auf die linke Bahn (z. B. die Hauptbahn oder die Nebenbahn, abhängig davon, welche nach links führt) geleitet werden kann. Eine Stromversorgung für die Elektromagnete E ist, obwohl in einem erfindungsgemäßen System oder einer Weiche, in dem ein solches Transportelement verwendet werden kann, typischerweise mindestens im Übergangsbereich vorhanden, nicht eingezeichnet. Die Stromversorgung kann beispielsweise über Bürstenabnehmer ober- und/oder unterhalb der Transportbahn erfolgen.

Schematisch eingezeichnet sind ebenfalls beispielhaft ein Fahrwerk 6 mit Führung 7, die aber auch anders als eingezeichnet ausgebildet sein können. Eine solche Führung kann in einer erfindungsgemäßen Weiche nur im Übergangsbereich vorhanden sein, oder nur bei der Weiche vorhanden sein, oder auch in anderen Bereichen des Transportsystems. Eingezeichnet sind ebenfalls magnetische Reaktionselemente 8, die beispielsweise als Permanentmagnete ausgebildet sein können.

Die Elektromagnete E können auch anders geschaltet werden, beispielsweise so, dass die Normalkraft auf der rechten Seite gestärkt und auf der linken Seite geschwächt wird. In weiteren Ausführungsformen, können auch die einzeln schaltbaren Elektromagnete E statt der Permanentmagnete 8 die Aufgabe des magnetischen Reaktionselementes übernehmen. Statt der Permanentmagnete können in anderen Ausführungsformen auch nicht-schaltende Elektromagnete als magnetische Reaktionselemente 8 eingesetzt sein.

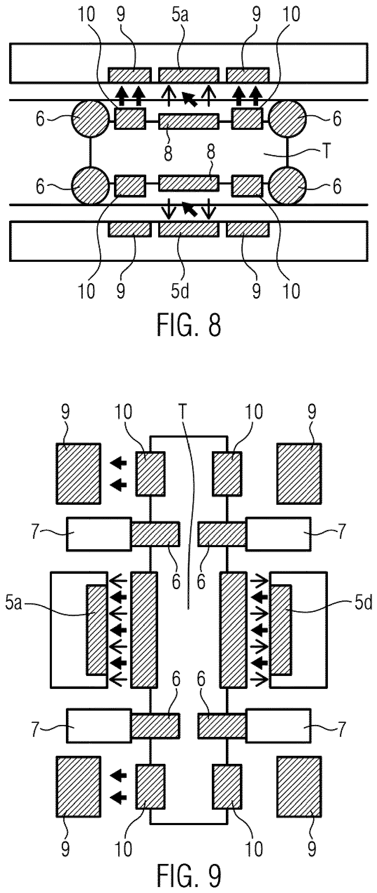

Figur 8 zeigt einen Querschnitt durch ein Transportelement T auf einer Transportbahn. Eingezeichnet sind schematisch Fahrwerke 6 (die auch anders als eingezeichnet ausgebildet sein können), Linearmotorstränge 5a und 5d, und magnetische leitfähige Passivbauteile 10 des Transportelementes, die dazu ausgebildet sind, mit den zusätzlich zu den Spulen der Linearmotorstränge vorhandenen ansteuerbaren Spulen 9 im Übergangsbereich der Weiche zusammen zu wirken um eine entsprechende Schaltkraft hinzuzufügen und damit die Schaltkraft zu erhöhen.

In dem in Figur 8 gezeigten Beispiel sind die Spulen 9 beispielhaft so geschaltet, dass die zusätzliche Schaltkraft nach oben wirkt. Andere Schaltungen sind möglich, z.B. können die Spulen so geschaltet sein, dass die zusätzliche Schaltkraft in der Figur nach unten wirkt (nicht gezeigt). Bei Betrachtung einer ersten Ebene durch (Transportbahn und) die (Mitte oder Symmetrieebene der) Linearmotorstränge und einer zweiten und dritten Ebene senkrecht dazu und parallel zur Richtung der Transportbahn (bzw. der Bewegungsrichtung eines beweglichen Transportelementes auf der Transportbahn) jeweils durch die der Transportbahn zugewandten Seite eines Linearmotors (oder dem Punkt des Linearmotors, der am nächsten an der Transportbahn liegt), sind in dem gezeigten Beispiel die zusätzlichen Spulen 9 beispielhaft jeweils (mindestens mit der der Transportbahn zugewandten Seite oder dem Punkt, der am nächsten an der Transportbahn liegt) in der gleichen Ebene angeordnet wie ein Linearmotorstrang, d.h. in der zweiten und dritten Ebene.

In Figur 9 findet sich eine ähnliche Anordnung wie in Figur 8, nur dass in dem gezeigten Beispiel zusätzlichen Spulen 9 nicht in der gleichen Ebene liegen wie die Linearmotorstränge, also nicht in der zweiten und dritten mit Bezug auf Figur 8 diskutierten Ebene, sondern in Bezug auf die zweite bzw. dritte Ebene auf einer Ebene, die parallel dazu verläuft, aber von der Transportbahn weiter entfernt ist als die zweite bzw. dritte Ebene.

In der Figur 9 ist eine Schaltung schematisch gezeigt, wo die Spulen 9 zusammen mit den Bauteilen 10 eine Schaltkraft nach links ausüben und gleichzeitig durch Schaltung von den Linearmotorsträngen 5a und 5d ebenfalls eine Schaltkraft nach links erzeugt wird, da Linearmotorstrang 5a so geschaltet ist, dass die Normalkraft verstärkt wird, und Linearmotorstrang 5d so geschaltet ist, dass die Normalkraft reduziert wird. Andere Schaltungen (hier nicht gezeigt), sind natürlich möglich, z. B. um eine Schaltkraft in Richtung der Figur nach rechts zu erzeugen.

## Patentansprüche

1. Weiche (1) eines Transportsystems für mehrere bewegliche Transportelemente (T), wobei die Weiche (1) eine Hauptbahn (3) sowie eine abzweigende Nebenbahn ( 4) umfasst, wobei eines der beweglichen Transportelemente (T) aus einem Übergangsbereich (2), in dem die Nebenbahn (4) von der Hauptbahn (3) abzweigt, wahlweise entlang der Hauptbahn (3) geführt oder in die Nebenbahn (4) überführt werden kann, wobei an der Hauptbahn (3) sowie an der Nebenbahn (4) jeweils ein oder mehrere Linearmotorstränge (5a, 5b, 5c, 5d) zur Bewegung des beweglichen Transportelements (T) vorgesehen sind, wobei eine Normalkraft zwischen dem beweglichen Transportelement (T) und dem nebenliegenden Linearmotorstrang oder den nebenliegenden Linearmotorsträngen (5a, 5b, 5c, 5d) vorhanden ist, die sich aufgrund des magnetischen Reaktionselementes an dem beweglichen Transportelement zwischen diesem und dem oder den Linearmotorsträngen ausbildet, wobei die Normalkraft auch ohne Beaufschlagung der Linearmotorstränge mit Strom aufgrund des magnetischen Reaktionselementes vorhanden ist, wobei die Kraft zum selektiven Führen des beweglichen Transportelementes entlang der Hauptbahn oder in Richtung der Nebenbahn als Schaltkraft bezeichnet wird, wobei sich im Weichenbereich die Schaltkräfte mit der Normalkraft überlagern, und wobei typischerweise Störgrößen umso größer sind, je größer die Normalkraft ist,
**dadurch gekennzeichnet, dass**
im Übergangsbereich Mittel zur Änderung der Normalkraft vorgesehen sind, wobei die Mittel vorgesehen sind, um die Normalkraft zu verringern,
der Übergangsbereich einen Bereich umfasst, in dem jedes der mehreren Transportelemente (T) den gleichen Weg nimmt, unabhängig davon, ob es anschließend weiter entlang der Hauptbahn (3) oder in die Nebenbahn (4) geführt wird und
in dem Bereich bereits Mittel zur Verringerung der Normalkraft vorgesehen sind, wodurch bereits vor Trennung von Wegen entweder entlang der Hauptbahn (3) oder in die Nebenbahn (4) eine Krafteinwirkung auf das Transportelement (T) sichergestellt wird.

2. Weiche (1) nach Anspruch 1, wobei im Übergangsbereich der Luftspalt zwischen den beiden Linearmotorsträngen (5a, 5d) und einem bewegten Transportelement (T) vergrößert ist.

3. Weiche (1) nach einem der Ansprüche 1 bis 2, wobei im Übergangsbereich die beiden Linearmotorstränge (5a", 5d") versetzt sind in Bezug auf die Begrenzung der Transportbahn und/oder verdreht im Bezug aufeinander und auf die Transportbahn eingebaut sind.

4. Weiche (1) nach einem der Ansprüche 1 bis 3, wobei die Führung auf Haupt- und Nebenbahnen (2, 3, 4) im Übergangsbereich so erfolgt, dass der Abstand zwischen dem Transportelement und den Linearmotorsträngen (5a, 5d) durch eine Führungskurve (FK', FK") vergrößert wird.

5. Weiche (1) nach einem der Ansprüche 1 bis 4, wobei im Übergangsbereich die magnetische Leitfähigkeit der Linearmotorstränge (5a, 5d) verringert ist.

6. Weiche (1) nach einem der Ansprüche 1 bis 5, wobei im Übergangsbereich der ferromagnetische Teil der Linearmotorstränge (5a, 5d) sich verjüngend ausgebildet ist.

7. Weiche (1) nach einem der Ansprüche 1 bis 6, wobei im Übergangsbereich ein Teil der Linearmotorgrundkörper (5a, 5d) aus einem anderen Material besteht als der Linearmotorgrundkörper (5a, 5b, 5c, 5d) an mindestens einem anderen Punkt der Haupt- oder Nebenbahn (3, 4), wobei das andere Material eine geringere magnetische Leitfähigkeit hat.

8. Transportsystem für ein bewegliches Transportelement (T), umfassend eine Transportbahn mit mindestens einer Weiche (1) nach einem der Ansprüche 1 bis 7.

## Claims

1. Switch (1) of a transport system for a plurality of movable transport elements (T), where the switch (1) comprises a main track (3) and a secondary track (4) branching off, where one of the movable transport elements (T) can be guided from a transition region (2), in which the secondary track (4) branches off from the main track (3), optionally along the main track (3) or transferred into the secondary track (4), where one or more linear motor sections (5a, 5b, 5c, 5d) are respectively provided at the main track (3) and at the secondary track (4) for moving the movable transport element (T), where a normal force is present between the movable transport element (T) and the adjacent linear motor section or the adjacent linear motor sections (5a, 5b, 5c, 5d) which forms due to the magnetic reaction element at the movable transport element between the latter and the linear motor section or linear motor sections, where the normal force also is present without applying current to the linear motor sections due to the magnetic reaction element, where the force for selectively guiding the movable transport element along the main track or in direction of the secondary track is referred to as switching force, where the switching forces are superimposed onto the normal force in the switch region, and where disturbances are typically greater the greater the normal force is,
**characterised in that**
devices for changing the normal force are provided in the transition region, where the devices are provided to reduce the normal force,
the transition region comprises a region in which each of the plurality of transport elements (T) takes the same path, regardless of whether it is then guided further along the main track (3) or into the secondary track (4) and
devices for reducing the normal force are already provided in the region, whereby even upstream of the separation of the paths either along the main track (3) or into the secondary track (4) a force effect on the transport element (T) is ensured.

2. Switch (1) according to claim 1, where in the transition region, the air gap between the two linear motor sections (5a, 5d) and a moved transport element (T) is enlarged.

3. Switch (1) according to one of claims 1 to 2, where, in the transition region, the two linear motor sections (5a", 5d") are installed offset in relation to the boundary of the transport track and/or rotated in relation to each other and to the transport track.

4. Switch (1) according to one of claims 1 to 3, where the guiding on main and secondary tracks (2, 3, 4) in the transition region is effected in such a way that the distance between the transport element and the linear motor sections (5a, 5d) is increased by a guide curve (FK', FK").

5. Switch (1) according to one of claims 1 to 4, where the magnetic conductivity of the linear motor sections (5a, 5d) is reduced in the transition region.

6. Switch (1) according to one of claims 1 to 5, where the ferromagnetic part of the linear motor sections (5a, 5d) is configured to be tapered in the transition region.

7. Switch (1) according to one of claims 1 to 6, where a part of the linear motor base body (5a, 5d) in the transition region consists of a different material than the linear motor base body (5a, 5b, 5c, 5d) at at least one other point of the main or secondary track (3, 4), where the different material has a lower magnetic conductivity.

8. Transport system for a movable transport element (T), comprising a transport track with at least one switch (1) according to one of claims 1 to 7.

## Revendications

1. Aiguillage (1) d'un système de transport pour plusieurs éléments de transport mobiles (T), dans lequel l'aiguillage (1) comprend une voie principale (3) ainsi qu'une voie secondaire (4) en ramification, dans lequel l'un des éléments de transport mobiles (T) peut être guidé au choix le long de la voie principale (3) à partir d'une zone de transition (2) dans laquelle la voie secondaire (4) se ramifie à partir de la voie principale (3) ou transféré dans la voie secondaire (4), dans lequel sur la voie principale (3) ainsi que sur la voie secondaire (4), respectivement, un ou plusieurs brins de moteur linéaire (5a, 5b, 5c, 5d) sont prévus pour déplacer l'élément de transport mobile (T), dans lequel une force normale est présente entre l'élément de transport mobile (T) et le(s) brin(s) de moteur linéaire adjacent(s) (5a, 5b, 5c, 5d), qui se forme sur la base de l'élément de réaction magnétique sur l'élément de transport mobile entre celui-ci et le(s) brin(s) de moteur linéaire, dans lequel la force normale est également présente sans application de courant aux brins de moteur linéaire sur la base de l'élément de réaction magnétique, dans lequel la force pour le guidage sélectif de l'élément de transport mobile le long de la voie principale ou en direction de la voie secondaire est appelée force de commutation, dans lequel les forces de commutation se superposent à la force normale dans la zone d'aiguillage, et dans lequel des perturbations sont typiquement plus grande, respectivement plus grandes que la force normale,
**caractérisé en ce que**
dans la zone de transition, des moyens sont prévus pour modifier la force normale, les moyens étant prévus pour réduire la force normale ;
la zone de transition comprend une zone dans laquelle chacun des plusieurs éléments de transport (T) suit le même trajet, qu'il soit ensuite guidé le long de la voie principale (3) ou dans la voie secondaire (4) ; et
des moyens de réduction de la force normale sont déjà prévus dans la zone, ce qui permet d'assurer une action de la force sur l'élément de transport (T) avant même la séparation de chemins, soit le long de la voie principale (3), soit dans la voie secondaire (4).

2. Aiguillage (1) selon la revendication 1, dans lequel, dans la zone de transition, l'intervalle d'air entre les deux brins de moteur linéaire (5a, 5d) et un élément de transport mobile (T) est agrandi.

3. Aiguillage (1) selon l'une quelconque des revendications 1 à 2, dans lequel, dans la zone de transition, les deux brins de moteur linéaire (5a", 5d") sont décalés par rapport à la limitation de la voie de transport et/ou sont montés en rotation l'un par rapport à l'autre et par rapport à la voie de transport.

4. Aiguillage (1) selon l'une quelconque des revendications 1 à 3, dans lequel le guidage sur des voies principale et secondaire (2, 3, 4) dans la zone de transition s'effectue de telle sorte que la distance entre l'élément de transport et les brins de moteur linéaire (5a, 5d) est augmentée par une courbe de guidage (FK', FK").

5. Aiguillage (1) selon l'une quelconque des revendications 1 à 4, dans lequel la conductivité magnétique des brins de moteur linéaire (5a, 5d) est réduite dans la zone de transition.

6. Aiguillage (1) selon l'une quelconque des revendications 1 à 5, dans lequel, dans la zone de transition, la partie ferromagnétique des brins de moteur linéaire (5a, 5d) est réalisée de forme conique.

7. Aiguillage (1) selon l'une quelconque des revendications 1 à 6, dans lequel, dans la zone de transition, une partie des corps de base de moteur linéaire (5a, 5d) est constituée d'un matériau différent de celui des corps de base de moteur linéaire (5a, 5b, 5c, 5d) en au moins un autre point de la voie principale ou secondaire (3, 4), l'autre matériau présentant une conductivité magnétique inférieure.

8. Système de transport pour un élément de transport mobile (T) comprenant une voie de transport avec au moins un aiguillage (1) selon l'une quelconque des revendications 1 à 7.
